# EUROPÄISCHE PATENTSCHRIFT

(11) **EP 0 740 315 B1**
(45) Veröffentlichungstag und Bekanntmachung des Hinweises auf die Patenterteilung: **07.11.2001**
(21) Anmeldenummer: 96810229.3
(22) Anmeldetag: 12.04.1996
(51) Int. Cl.: H01F 6/06, H01F 36/00

(54) **Supraleitende Spule**
Superconducting coil
Bobine supraconductrice

(30) Priorität: 24.04.1995 DE 19515003
(43) Veröffentlichungstag der Anmeldung: 30.10.1996
(73) Patentinhaber: ABB Sécheron SA, 1211 Genève (CH)
(72) Erfinder: Demarmels, Anton, Dr., 5600 Lenzburg (CH); Hörnfeldt, Sven, Dr., 72462 Västeras (SE); König, Friedrich, 5225 Oberbözberg (CH); Rhyner, Jakob, Dr., 8006 Zürich (CH); Rivera, José Maria, 1006 Lausanne (CH)
(74) Vertreter: ABB Patent Attorneys

(56) Entgegenhaltungen:
- EP-A- 0 353 433
- WO-A-95/08830
- PATENT ABSTRACTS OF JAPAN vol. 013, no. 292 (E-782), 6.Juli 1989 & JP-A-01 072505 (TOKAI UNIV;OTHERS: 01), 17.März 1989,
- IEEE TRANSACTIONS ON MAGNETICS, Bd. 26, Nr. 2, 1.März 1990, Seiten 917-920, XP000172620 MUTA I ET AL: "FINITE ELEMENT ANALYSIS OF TRANSIENT PHENOMENA IN FOUR-WOUND TYPE OF SUPERCONDUCTING POWER TRANSFORMER"

## Beschreibung

### TECHNISCHES GEBIET

Bei der Erfindung wird ausgegangen von einer supraleitenden Spule nach dem Oberbegriff des Patentanspruchs 1. Die Erfindung betrifft auch eine Verwendung der supraleitenden Spule.

### STAND DER TECHNIK

Mit dem Oberbegriff des Patentanspruchs 1 nimmt die Erfindung auf einen Stand der Technik Bezug, wie er aus der DE AS 1 589 992 bekannt ist. Dort werden bei einer gleichstromgespeisten Spule auf Tieftemperatursupraleiterbasis mehrere Teilspulen entweder parallel oder in Serie geschaltet. Die Teilspulen sind sowohl koaxial als auch konzentrisch angeordnet und bilden somit innere und äussere Teilspulen.

Aus dem Artikel "Finite Element Analysis of Transient Phenomena in Four-Wound Type of Superconducting Power Transformer", IEEE Transactions on Magnetics, Bd 26, Nr 2, Seiten 917-920, ist ein supraleitender Transformator mit jeweils zwei Primär- und Sekundär- Teilspulen bekannt. Die je zwei Teilspulen umfassen eine Haupt- und eine Hilfswicklung, wobei zwischen den zwei Hilfswicklungen (der Primär- und der Sekundärspule) eine hohe Streuinduktivität (leakage inductance) vorgesehen ist.

In der EP-A1-0 353 433 wird, ausgehend von einem bandförmigen Vorprodukt einer supraleitenden intermetallischen Verbindung mit A15-Kristallstrukturtur, wie z. B. Nb₃Sn oder V₃Ga, nach vorgängiger Reinigung und Aufrauhung der Oberfläche der Leiter durch Plasmaspritzen allseitig mit einer Oxidschicht versehen, zu einer Spule gewickelt und in einer Reaktionsglühbehandlung zu einem Supraleiter umgewandelt. Vor dem Wickeln der Spule wird auf den isolierten Leiter eine Glasgewebeschicht aufgebracht. Nach dem Reaktionsglühen wird die Spule mit Epoxidharz imprägniert. Nachteilig ist die teure Kühlung mit flüssigem Helium.

Aus der DE-A1-4 232 703 ist ein supraleitender Transformator für ein Schienenfahrzeug mit Spulen aus einem Hochtemperatursupraleiter bekannt, bei dem mit flüssigem Stickstoff gekühlt wird. Der Aufbau der Spulen ist nicht näher beschrieben.

Durch die DE 38 03 285 C2 ist ein Hochtemperatur-Supraleiter bekannt, bei dem mehrere vorgefertigte geschlitzte Zylinderringe über an den Schlitz angrenzende Kontaktflächen elektrisch durch mechanisches Zusammenpressen oder Schweissen verbunden sind und eine toroidförmige Spule bilden.

Aus der DE 37 29 125 A1 ist ein Verfahren zur Herstellung eines keramischen, supraleitenden Bauelements bekannt, bei dem auf einen zylindrischen Träger alternierend mehrere extrem dünne supraleitende und normalleitende Schichten aufgebracht werden. Nach einer Anzahl derartiger Folgen wird jeweils eine dickere Schicht aus einem normalleitenden Material und eine Isolationsschicht aufgebracht.

### DARSTELLUNG DER ERFINDUNG

Aufgabe der Erfindung ist es, eine supraleitende Spule der eingangs genannten Art derart weiterzuentwickeln, dass die Wechselstromverluste im Supraleiter verringert werden. Diese Aufgabe wird durch eine supraleitende Spule mit den Merkmalen des Patentanspruchs 1 gelöst.

Gemäss der Erfindung lassen sich durch eine Transposition von inneren und äusseren Lagen von inneren und äusseren Teilspulen Wechselstromverluste reduzieren.

Vorteilhafte Ausgestaltungen der Erfindung sind in den abhängigen Patentansprüchen definiert.

Ein Vorteil der Erfindung besteht darin, dass die Spulen vielseitiger einsetzbar und einfacher kühlbar sind. Wenn der Strom pro Spule die Tragfähigkeit eines Hochtemperatursupraleiters übersteigt, dann werden mehrere Leiter parallel geführt.

Ein weiterer Vorteil der Erfindung besteht darin, dass bei der Spule auch eine grosse Windungszahl zu einer relativ geringen Bauhöhe führt.

### KURZE BESCHREIBUNG DER ZEICHNUNGEN

Die Erfindung wird nachstehend anhand von Ausführungsbeispielen erläutert. Es zeigen:
- Fig. 1: ein Prinzipschaltbild eines Transformators,
- Fig. 2: einen Teilschnitt durch Magnetkern und gekühlte Nieder- und Hochspannungsteilspulen des Transformators gemäß Fig. 1,
- Fig. 3: Niederspannungsspulen gemäß Fig. 2 mit parallelen Lagen bzw. Leitern,
- Fig. 4: ausschnittsweise eine perspektivische Ansicht einer Niederspannungsteilspule mit mehreren parallelen Leitern,
- Fig. 5 und 6: das Prinzip der Stromzu- und -wegführung am Eingang bzw. Ausgang einer Spule und
- Fig. 7: die Einspannung der Teilspulen eines Transformators gemäß Fig. 1.

### WEGE ZUR AUSFÜHRUNG DER ERFINDUNG

In den Figuren sind gleiche Teile mit gleichen Bezugszeichen gekennzeichnet.

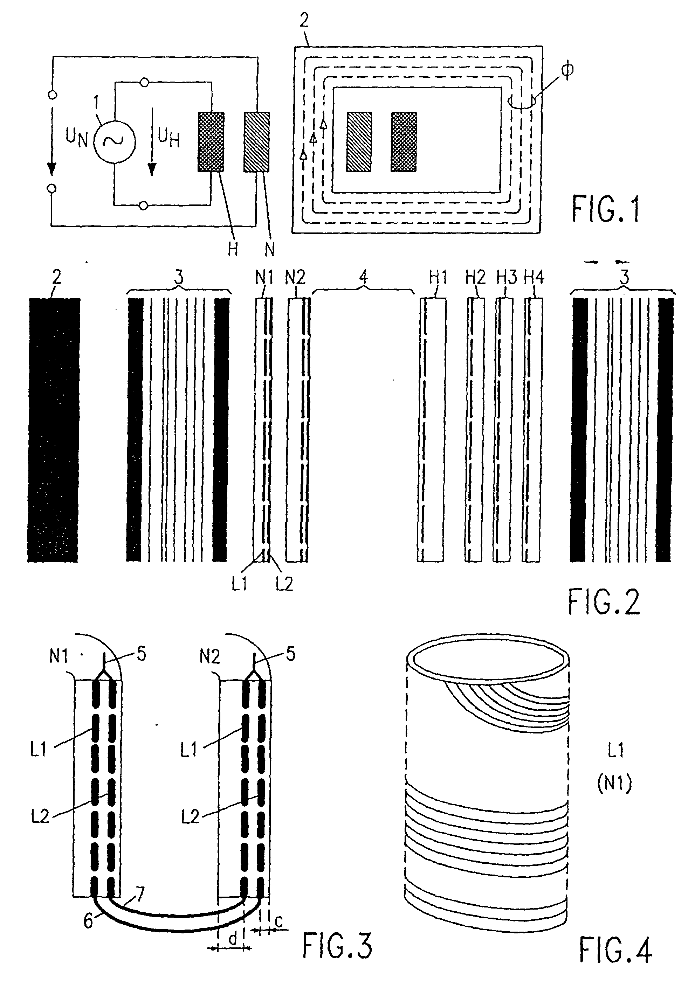

Fig. 1 zeigt in einem Prinzipschaltbild einen supraleitenden Transformator für eine elektrische Leistung von z. B. 630 kVA und eine Frequenz von 50 Hz mit einem lamellierten Eisenkern bzw. Transformatorkern (2), einer Niederspannungsspule (N), die im Betrieb ausgangsseitig eine Niederspannung (U_{N}) von z. B. 420 V liefert, und eine darüberliegende Hochspannungsspule (H), welcher von einem Hochspannungsnetz bzw. von einer Hochspannungsquelle (1) eine Hochspannung (U_{H}) von z. B. 18,7 kV zugeführt ist. Mit (Φ) ist ein magnetischer Fluß im Transformatorkern (2) bezeichnet.

Fig. 2 zeigt einen Querschnitt durch den von den beiden Spulen (N, H) umgriffenen Schenkel des im Querschnitt rechteckförmigen Transformatorkerns (2) gemäß Fig. 1 mit 2 Teilspulen (N1, N2) der Niederspannungsspule (N) und 4 Teilspulen (H1 - H4) der Hochspannungsspule (H), welche sich im Innenraum dieses rechteckförmigen Transformatorkerns (2) und innerhalb eines Kryostaten (3) befinden. Der im Betrieb mit flüssigem Stickstoff gefüllte Kryostat (3) ist 25 mm dick. Ein Kühlkanal (4) zwischen Niederspannungsspule (N) und Hochspannungsspule (H) hat eine Breite von 5 mm. Der Abstand zwischen Transformatorkern (2) und Kryostat (3) beträgt 15 mm. Die Teilspulen (N1, H2 - H4) sind 5 mm dick und die Teilspulen (N2) bzw. (H1) 8 mm bzw. 7 mm. Die Teilspule (N1) hat vom Kryostaten (3) einen Abstand von 25 mm und die Teilspule (H4) einen von 30 mm.

Die Teilspulen (N1, N2; H1 - H4) haben einen gegenseitigen Abstand von 5 mm, wobei die Teilspulen (N1, N2) je 2 Lagen (L1, L2) und die Teilspulen (H1 - H4) je eine Lage eines Hochtemperatursupraleiters aufweisen.

Jeder bandförmige Hochtemperatursupraleiter besteht aus mehreren Drähten bzw. Fäden aus Bi₂Sr₂Ca₂Cu₃O₁₀, die in eine Silbermatrix eingebettet sind; er hat eine Breite von 2,5 mm und eine Dicke von 0,25 mm. Eingebettet ist dieser Hochtemperatursupraleiter in einem faserverstärkten, vorzugsweise glasfaserverstärkten Epoxidharz oder in einem Kunststoff mit einer ähnlichen Wärmedehnung wie Metall. Die Hochtemperatursupraleiter bilden die Lagen (L1, L2) der Teilspule (N1).

Eine Dicke (d) der Einbettung im Epoxidharz oder Kunststoff ist in radialer Kraftrichtung derart dimensioniert, vorzugsweise > 2 mm, daß die im Kurzschlußfall auftretenden mechanischen Kräfte aufgenommen werden, ohne daß der Hochtemperatursupraleiter eine kritische Dehnung von 0,2 % überschreitet. In der zu dieser Kraftrichtung entgegengesetzten Richtung ist eine Dicke (c) des Epoxidharzes oder Kunststoffes so dünn, vorzugsweise ≤ 2 mm, insbesondere ≤ 0,6 mm, daß die im Hochtemperatursupraleiter entstehende Verlustwärme mit großem Wirkungsgrad an das Kühlmedium abgeführt werden kann, vgl. Fig. 3. Der Abstand zwischen benachbarten Lagen (L1, L2) von Hochtemperatursupraleitern einer Niederspannungsspule (N1, N2) ist ebenfalls ≤ 2 mm, vorzugsweise ≤ 0,6 mm.

Fig. 3 zeigt schematisch 2 Niederspannungsspulen (N1, N2) gemäß Fig. 2 mit jeweils 2 benachbarten Lagen (L1, L2) von Hochtemperatursupraleitern, die in einem glasfaserverstärkten Epoxidharz eingebettet und endseitig über elektrische Leitungen (6, 7) aus Normalleitern oder Hochtemperatursupraleitern in Reihe und über Leitungsverbinder bzw. Kontakte bzw. Silberplättchen (5) parallelgeschaltet sind. Bei mehreren Lagen (L1, L2) wird, wie bei der dargestellten Verbindung, der Strom zwischen den Lagen transponiert, um Wechselstromverluste zu minimieren. Dies ist die beste Transposition, welche sich mit derzeit bekannten Hochtemperatursupraleitern erreichen läßt. Die Kontaktierung am Spulenende wird durch Anlöten an ein für alle Lagen (L1, L2) gemeinsames Silberplättchen (5) sichergestellt.

Wenn der Strom pro Spule (N) die Tragfähigkeit eines Hochtemperatursupraleiters übersteigt, dann werden mehrere Leiter parallel geführt, insbesondere bei der Niederspannungsspule (N).

Fig. 4 zeigt, alternativ zu dem Ausführungsbeispiel von Fig. 3, auschnittsweise und perspektivisch eine Lage (L1) der Niederspannungsspule (N1) mit 7 parallelen Leitern.

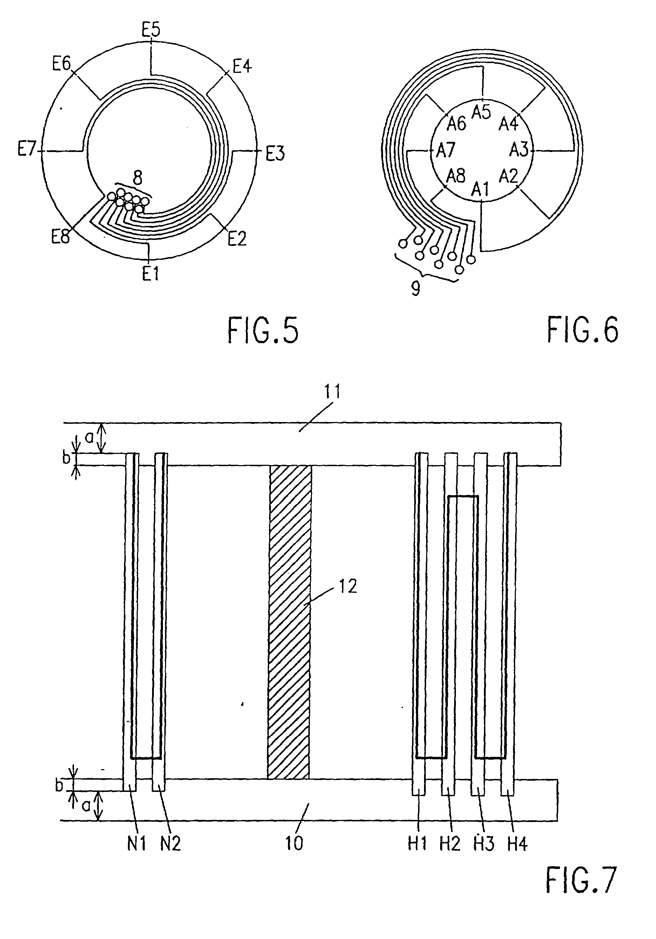

Die Fig. 5 und 6 zeigen eine nahezu punktförmige, d. h. lokal eng begrenzte Stromzuführung (8) in die Spule bzw. eine nahezu punktförmige Stromwegführung (9) aus der Spule von der warmen Umgebung in den kalten Kryostaten (3).

Vorzugsweise weisen Zu- und Ableitungen (E1 - E8, A1 - A8) der Teilspulen (N1, N2; H1 - H4) am Spulenanfang bzw. am Spulenende einen gleichen gegenseitigen Abstand auf, derart, daß die Zu-und Ableitungen (E1 - E8, A1 - A8) gleichmäßig über den Spulenumfang verteilt sind. Die Summe der Längen jeder anfangsund endseitigen Leiterbahn der Hochtemperatursupraleiter ist etwa gleich, derart, daß eingangsseitig kürzere Leiterbahnen (E1) ausgangsseitig (A1) länger sind und umgekehrt (E8, A8). Durch eine derartige Kontaktierung der Enden der Hochtemperatursupraleiter mit der Stromzuführung (8) und Stromwegführung (9) läßt sich genau eine Spulenwindung realisieren. Dadurch wird eine kompakte Bauform erreicht.

Die Transposition der inneren bzw. äußeren Lagen (L1, L2) der inneren bzw. äußeren Teilspulen (N1, N2) am unteren Ende der Niederspannungsspule (N), vgl. Fig. 3, hat zur Folge, daß der Strom gleichmäßig auf die verschiedenen Lagen (L1, L2) aufgeteilt wird. Dies führt zu der angestrebten Minimierung der Wechselstromverluste.

Fig. 7 zeigt die Einspannung der Teilspulen (N1, N2; H1 - H4) in 2 Trägerringe bzw. untere und obere Abstandshalter (10, 11), welche durch mindestens eine elektrisch isolierende Zugstange (12) auf einem vorgebbaren gegenseitigen Abstand von 0,75 m gehalten werden. Die Teilspulen (N1, N2; H1 - H4) tauchen über eine vorgebbare Länge (b) von 5 mm in die Abstandshalter (10, 11) ein, bei einer verbleibenden Resttiefe (a) von 15 mm. Die vor allem bei einem Kurzschluß auftretenden Kräfte in Axialrichtung werden von diesen Abstandshaltern (10, 11) aufgenommen.

Die Niederspannungsspule (N) ist mit 13 Windungen, von denen in Fig. 3 nur 7 dargestellt sind, und 2 Teilspulen (N1, N2) mit je 2 Leiterlagen (L1, L2) dimensioniert. Pro Lage (L1, L2) werden 36 Leiter parallel geführt (in Fig. 4 sind nur 7 parallelgeführte Leiter dargestellt), so daß 72 Leiter auf eine Teilspule mit je 6 Windungen gewickelt werden. Die 13. Windung wird durch die Stromzuführung (8) und die Stromwegführung (9) gebildet.

Wichtig ist, daß nicht ein Vorprodukt, sondern der fertige Hochtemperatursupraleiter zu einer Spule mit einem Mindestradius von 15 cm gewickelt wird.

Es versteht sich, daß andere als die angegebenen Dimensionen für die Spulen und den Transformator verwendet werden können.

### BEZEICHNUNGSLISTE

- 1: Hochspannungsnetz, Hochspannungsquelle
- 2: Transformatorkern
- 3: Kryostat
- 4: Kühlkanal zwischen N und H
- 5: Leitungsverbinder, Kontakt, Silberplättchen
- 6, 7: elektrische Leitungen, Normalleiter
- 8: Stromzuführunq
- 9: Stromwegführung
- 10, 11: unterer bzw. oberer Abstandshalter für N, H
- 12: Zugstange

- a: Eintauchtiefe von N bzw. H in 10 bzw. 11
- A1 - A8: Positionen der Hochtemperatursupraleiter am Spulenanfang

- b: Resttiefe von N bzw. H in 10 bzw. 11
- c: Dicke, Abstand
- d: Dicke
- E1 - E8: Positionen der Hochtemperatursupraleiter am Spulenende

- H: Hochspannungsspule
- H1 - H4: Hochspannungsteilspulen
- L1, L2: Lagen von N1, N2
- N: Niederspannungsspule
- N1 - N2: Niederspannungsteilspulen
- U_{H}: Hochspannung
- U_{N}: Niederspannung
- Φ: magnetischer Fluß in 2

## Patentansprüche

1. Supraleitende Spule
a) mit mindestens einer Lage von Wicklungselementen aus einem Hochtemperatursupraleiter,
b) wobei die Spule mindestens eine innere Teilspule (N1) und eine äussere Teilspule (N2) aufweist,
**dadurch gekennzeichnet**,
c) dass die mindestens 2 Teilspulen (N1, N2) mehrere parallelgeschaltete übereinanderliegende Lagen (L1, L2) von elektrisch und mechanisch parallelgeführten Hochtemperatursupraleitern aufweisen und
d) dass eine äussere Lage (L2) einer inneren Teilspule (N1) mit einer inneren Lage (L1) einer äusseren Teilspule (N2) elektrisch in Reihe geschaltet ist und umgekehrt.

2. Supraleitende Spule nach Anspruch 1, **dadurch gekennzeichnet, dass** die Teilspulen (N1, N2; H1 - H4) über mindestens einen Normalleiter (6,7) miteinander elektrisch verbunden sind.

3. Supraleitende Spule nach Anspruch 1, **dadurch gekennzeichnet**,
a) dass mindestens eine Lage (L1, L2) einer Teilspule (N1, N2) mehrere parallele Leiter umfasst,
b) deren Anfangspositionen am Spulenanfang (E1 - E8) und deren Endpositionen am Spulenende (A1 - A8) gleichmässig über den Spulenumfang verteilt sind.

4. Supraleitende Spule nach Anspruch 3, **dadurch gekennzeichnet**,
a) dass eine Stromzuführung (8) in die Spule und eine Stromwegführung (9) aus der Spule vorgesehen sind, und
b) dass eine Summe einer Länge einer anfangsseitigen Leiterbahn zwischen der Stromzuführung (8) und der Anfangsposition (E1 - E8) und einer Länge einer entsprechenden endseitigen Leiterbahn zwischen der Endposition (A1 - A8) und der Stromwegführung (9) für alle Leiter einer Spule etwa gleich ist.

5. Supraleitende Spule nach Anspruch 4, **dadurch gekennzeichnet, dass** die Summe der Längen der anfangs- und endseitigen Leiterbahnen ungefähr eine Spulenwindung ergibt.

6. Supraleitende Spule nach einem der vorhergehenden Ansprüche, **dadurch gekennzeichnet, dass** die Teilspulen (N1, N2; H1 - H4) endseitig in Abstandshaltern (10, 11) in ihrer Position festgelegt sind.

7. Supraleitende Spule nach einem der vorhergehenden Ansprüche, **dadurch gekennzeichnet, dass** der Hochtemperatursupraleiter von mindestens einer elektrisch isolierenden Faser umgeben ist und in einem elektrisch isolierenden, faserverstärkten Epoxidharz oder in einem Kunststoff eingebettet ist.

8. Verwendung mindestens einer supraleitenden Spule nach einem der vorhergehenden Ansprüche in einem Transformator mit einer Niederspannungsspule und einer Hochspannungsspule, wobei die Niederspannungsspule mindestens eine innere (N1) und eine äussere (N2) koaxiale Teilspule aufweist, welche Teilspulen (N1, N2) mehrere parallelgeschaltete übereinanderliegende Lagen (L1, L2) von parallelgeführten Hochtemperatursupraleitern aufweisen und wobei eine äussere Lage (L2) einer inneren Teilspule (N1) mit einer inneren Lage (L1) einer äusseren Teilspule (N2) elektrisch in Reihe geschaltet ist und umgekehrt.

## Claims

1. Superconducting coil
a) having at least one layer of winding elements made of a high-temperature superconductor,
b) in which the coil has at least one inner coil subunit (N1) and one outer coil subunit (N2),
**characterized in that**
c) the at least 2 coil subunits (N1, N2) have a plurality of parallel-connected superposed layers (L1, L2) of high-temperature superconductors routed electrically and mechanically in parallel,
d) an outer layer (L2) of an inner coil subunit (N1) is electrically connected in series with an inner layer (L1) of an outer coil subunit (N2), and vice versa.

2. Superconducting coil according to Claim 1, **characterized in that** the coil subunits (N1, N2; H1 - H4) are electrically connected to one another via at least one normal conductor (6, 7).

3. Superconducting coil according to Claim 1, **characterized in that**
a) at least one layer (L1, L2) of one coil subunit (N1, N2) comprises a plurality of parallel conductors,
b) whose start positions at the start (E1 - E8) of the coil, and whose end positions at the end (A1 - A8) of the coil, are distributed uniformly over the circumference of the coil.

4. Superconducting coil according to Claim 3, **characterized in that**
a) a current input (8) into the coil and a current output (9) from the coil are provided, and
b) a sum of a length of a conductor path, on the start side, between the current input (8) and the start position (E1 - E8), and a length of a corresponding conductor path, on the end side, between the end position (A1 - A8) and the current output (9), is approximately equal for all conductors of a coil.

5. Superconducting coil according to Claim 4, **characterized in that** the sum of the lengths of the conductor paths, on the start and end sides, approximately gives one coil turn.

6. Superconducting coil according to one of the preceding claims, **characterized in that** the coil subunits (N1, N2; H1 - H4) are held fixed in position on the end side in spacers (10, 11).

7. Superconducting coil according to one of the preceding claims, **characterized in that** the high-temperature superconductor is enclosed by at least one electrically insulating fibre, and is embedded in an electrically insulating fibre-reinforced epoxy resin or in a plastic.

8. Use of at least one superconducting coil according to one of the preceding claims in a transformer having a low-voltage coil and a high-voltage coil, the low-voltage coil having at least one inner (N1) and one outer (N2) coaxial coil subunit, which coil subunits have a plurality of parallel-connected superposed layers (L1, L2) of high-temperature superconductors routed in parallel, and an outer layer (L2) of an inner coil subunit (N1) being electrically connected in series with an inner layer (L1) of an outer coil subunit (N2), and vice versa.

## Revendications

1. Bobine supraconductrice
a) avec au moins une couche d'éléments d'enroulement en un supraconducteur à haute température,
b) dans laquelle la bobine présente au moins une bobine partielle interne (N1) et une bobine partielle externe (N2),
**caractérisée en ce que**
c) les au moins 2 bobines partielles (N1, N2) présentent plusieurs couches superposées (L1, L2), raccordées en parallèle, de supraconducteurs à haute température menés parallèlement au point de vue électrique et mécanique, et **en ce que**
d) une couche externe (L2) d'une bobine partielle interne (N1) est raccordée en série avec une couche interne (L1) d'une bobine partielle externe (N2) et inversement.

2. Bobine supraconductrice suivant la revendication 1, **caractérisée en ce que** les bobines partielles (N1, N2; H1 - H4) sont raccordées électriquement les unes aux autres par au moins un conducteur normal (6, 7).

3. Bobine supraconductrice suivant la revendication 1, **caractérisée en ce que**
a) au moins une couche (L1, L2) d'une bobine partielle (N1, N2) comprend plusieurs conducteurs parallèles, et **en ce que**
b) leurs positions initiales au début de la bobine (E1 - E8) et leurs positions finales à la fin de la bobine (A1 - A8) sont réparties uniformément sur le périmètre de la bobine.

4. Bobine supraconductrice suivant la revendication 3, **caractérisée en ce que**
a) il est prévu une arrivée de courant (8) dans la bobine et un départ de courant (9) hors de la bobine, et **en ce que**
b) une somme d'une longueur d'un tronçon de conducteur à l'entrée entre l'arrivée de courant (8) et la position initiale (E1 - E8) et d'une longueur d'un tronçon de conducteur correspondant à la sortie entre la position finale (A1 - A8) et le départ de courant (9) est sensiblement égale pour tous les conducteurs d'une bobine.

5. Bobine supraconductrice suivant la revendication 4, **caractérisée en ce que** la somme des longueurs des tronçons de conducteur à l'entrée et à la sortie équivaut environ à une spire de la bobine.

6. Bobine supraconductrice suivant l'une quelconque des revendications précédentes, **caractérisée en ce que** les bobines partielles (N1, N2; H1 - H4) sont fixées dans leur position à leurs extrémités dans des pièces d'écartement (10, 11).

7. Bobine supraconductrice suivant l'une quelconque des revendications précédentes, **caractérisée en ce que** le supraconducteur à haute température est entouré par au moins une fibre électriquement isolante et est noyé dans une résine époxyde électriquement isolante renforcée par des fibres ou dans une matière plastique.

8. Utilisation d'au moins une bobine supraconductrice suivant l'une quelconque des revendications précédentes dans un transformateur avec une bobine à basse tension et une bobine à haute tension, dans laquelle la bobine à basse tension présente au moins une bobine partielle interne (N1) et une bobine partielle externe (N2) coaxiales, bobines partielles (N1, N2) qui présentent plusieurs couches superposées (L1, L2), raccordées en parallèle, de supraconducteurs à haute température menés parallèlement, et dans laquelle une couche externe (L2) d'une bobine partielle interne (N1) est raccordée électriquement en série avec une couche interne (L1) d'une bobine partielle externe (N2) et inversement.
